(19) Europäisches Patentamt
European Patent Office
Office européen des brevets

(11) **EP 3 904 457 A1**

(12) **EUROPEAN PATENT APPLICATION**
published in accordance with Art. 153(4) EPC

(43) Date of publication:
**03.11.2021 Bulletin 2021/44**

(51) Int Cl.:
***C08L 71/10*** (2006.01)     ***C08L 77/02*** (2006.01)

(21) Application number: **19904058.5**

(22) Date of filing: **23.12.2019**

(86) International application number:
**PCT/JP2019/050362**

(87) International publication number:
**WO 2020/137972 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2018 JP 2018247635**

(71) Applicant: **NIPPON STEEL Chemical & Material Co., Ltd.**
**Tokyo 103-0027 (JP)**

(72) Inventors:
• **MUKUDAI, Jun**
  **Tokyo 103-0027 (JP)**
• **ANDOH, Hideki**
  **Tokyo 103-0027 (JP)**
• **TAKAHASHI, Hiroyuki**
  **Tokyo 103-0027 (JP)**

(74) Representative: **Beckmann, Claus**
**Kraus & Weisert**
**Patentanwälte PartGmbB**
**Thomas-Wimmer-Ring 15**
**80539 München (DE)**

(54) **HIGHLY HEAT-RESISTANT THERMOPLASTIC RESIN COMPOSITION AND MOLDED ARTICLE MANUFACTURED THEREFROM**

(57)     Provided is a thermoplastic resin composition which has excellent heat resistance, mechanical characteristics, and adhesion properties with respect to a reinforcing fiber base material, which is a different kind of material, and from which a molded article particularly having excellent rigidity at a high temperature is obtained. A thermoplastic resin composition is provided, which includes: a phenoxy resin (A) having a hydroxy group and/or an epoxy group at a polymer chain terminal; and a polyamide resin (B), wherein a proportion of the phenoxy resin (A) is 50 to 90 mass% and a proportion of the polyamide resin (B) is 10 to 50 mass% relative to a total amount of 100 mass% of the phenoxy resin (A) and the polyamide resin (B), and a tensile modulus retention rate [Equation (i) below] of a dumbbell test piece (JIS K 7139, Type A1) which is calculated from a tensile modulus (M) at 80°C relative to a tensile modulus (Mo) at 23°C is 50% or more, with the dumbbell test piece being obtained by subjecting the thermoplastic resin composition to injection molding, and a molded article manufactured therefrom is also provided.

Equation (i): Tensile modulus retention rate (%) = M [tensile modulus (MPa) at 80°C]/Mo [tensile modulus (MPa) at 23°C] × 100

Equation (i):

EP 3 904 457 A1

[Fig. 1]

PHENOXY RESIN(A)/POLYAMIDE RESIN(B):80/20

1 μm

## Description

[Technical Field]

The present invention relates to a thermoplastic resin composition containing a phenoxy resin and a polyamide resin, and particularly to a thermoplastic resin composition having excellent heat resistance and mechanical characteristics with respect to an injection molded article.

[Background Art]

Thermoplastic polyhydroxy polyether resins are known as phenoxy resins and are used in a wide range of applications, such as insulating films or adhesive films in the electronic field, due to their excellent impact resistance, adhesion properties, and the like. In addition, thermoplastic polyhydroxy polyether resins have been used as modified resins for matrix resins of fiber-reinforced composite materials to improve the mechanical properties and the adhesion properties with respect to carbon fibers. Regarding their applications, thermoplastic polyhydroxy polyether resins are mainly used as modifiers for thermosetting resins such as epoxy resins. However, thermosetting resins have problems in, for example, processability in a shorter period of time or recyclability after use.

Phenoxy resins are resins having thermoplasticity, and melt and solidify depending on the temperature. Therefore, phenoxy resins can be processed in a short period of time and have favorable adhesion properties with respect to various different kinds of materials. In addition, phenoxy resins are materials having excellent strength and rigidity, but are materials with which there are difficulties in expanding their applications due to inferior heat resistance when compared with engineering plastics or the like.

On the other hand, polyamide resins are resins having excellent heat resistance and chemical resistance, and are widely used as engineering plastics. However, there is a problem that their impact strength is insufficient, a problem that the rigidity thereof significantly deteriorates in a high temperature environment, and a problem that the rigidity thereof deteriorates with high water absorbability.

Examples of methods of melt-blending a phenoxy resin and a polyamide resin include a proposal (refer to PTL 1) of a resin composition for improving vibration-damping properties of a polyamide resin, a proposal (refer to PTL 2) of a resin composition for improving heat resistance and water absorbing properties while suppressing deterioration of processability of a polyamide resin, a proposal (refer to PTL 3) of a resin composition having excellent physicochemical properties such as mechanical characteristics and water resistance, and a proposal (refer to PTL 4) of a resin composition in which moldability of a polyamide resin is improved while maintaining the characteristics of the polyamide resin. However, all are proposals which improve a polyamide resin in a case of adding a small amount of phenoxy resin to a polyamide resin and have not been studied for the purpose of improving heat resistance of a phenoxy resin. That is, from the viewpoints of characteristics (such as heat resistance and solvent resistance) or usability of a phenoxy resin, practically sufficient research on a system, in which a large amount of phenoxy resin is employed as a molding material, has not been conducted.

[Citation List]

[Patent Literature]

[PTL 1] Japanese Patent Application Publication No. H04-11654
[PTL 2] Japanese Patent No. 4852262
[PTL 3] Japanese Patent Application Publication No. H03-237160 [PTL 4] Japanese Patent Application Publication No. S63-202655

[Non Patent Literature]

[NPL 1] Reinforced Plastics, vol. 59 (2013), pp. 330

[Summary of Invention]

[Technical Problem]

The present invention relates to a thermoplastic resin composition containing a phenoxy resin and a polyamide resin and provides a thermoplastic resin composition which exhibits improved heat resistance and mechanical characteristics with respect to an injection molded article and particularly has excellent rigidity in a high temperature environment.

[Solution to Problem]

That is, the gist of the present invention is as follows.

(1) A thermoplastic resin composition including: a phenoxy resin (A) having a hydroxy group and/or an epoxy group at a polymer chain terminal; and a polyamide resin (B), wherein a proportion of the phenoxy resin (A) is 50 to 90 mass% and a proportion of the polyamide resin (B) is 10 to 50 mass% relative to a total amount of 100 mass% of the phenoxy resin (A) and the polyamide resin (B), and a tensile modulus retention rate [Equation (i) below] of a dumbbell test piece (JIS K 7139, Type A1) which is calculated from a tensile modulus (M) at 80°C relative to a tensile modulus (Mo) at 23°C is 50% or more, with the dumbbell test piece being obtained by subjecting the thermoplastic resin composition to injection molding:

$$\text{Equation (i): Tensile modulus retention rate (\%) = M}$$
$$\text{[tensile modulus (MPa) at 80°C]/Mo [tensile modulus (MPa) at}$$
$$\text{23°C]} \times 100.$$

(2) The thermoplastic resin composition according to (1), wherein a dimensional retention rate [Equation (ii) below] calculated from a total length of the dumbbell test piece (JIS K 7139, Type A1) before and after imparting heating history to the dumbbell test piece at 120°C for 2 hours under static conditions is 98% or more:

$$\text{Equation (ii): Dimensional retention rate (\%) = L [total}$$
$$\text{length (mm) after heating history]/Lo [total length (mm)}$$
$$\text{before heating history]} \times 100.$$

(3) The thermoplastic resin composition according to (1) or (2), wherein the polyamide resin (B) is a fully-aliphatic polyamide and/or a semi-aliphatic polyamide.
(4) The thermoplastic resin composition according to (3), wherein the polyamide resin (B) is polyamide 6.
(5) The thermoplastic resin composition according to any one of (1) to (4), wherein a glass transition temperature of the phenoxy resin (A) is 65°C to 200°C.
(6) The thermoplastic resin composition according to any one of (1) to (5), further including a reinforcing filler.
(7) A pellet of the thermoplastic resin composition according to any one of (1) to (6).
(8) A molded article manufactured from the thermoplastic resin composition according to any one of (1) to (6).
(9) Fiber-reinforced plastic including: a reinforcing fiber base material; and the thermoplastic resin composition according to any one of (1) to (5).

[Advantageous Effects of Invention]

The thermoplastic resin composition of the present invention and a molded article manufactured therefrom have excellent heat resistance, mechanical characteristics, and adhesion properties with respect to a reinforcing fiber base material such as a carbon fiber which is a different kind of material and particularly exhibit significantly improved rigidity at a high temperature, and therefore, it can be suitably used for automotive applications and applications such as railway vehicles and aircraft.

[Brief Description of Drawings]

[Fig. 1] Fig. 1 is an explanatory view (photograph) obtained by observing a thermoplastic resin composition according to Example 1 of the present invention with a transmission electron microscope (TEM).

[Fig. 2] Fig. 2 is an explanatory view (photograph) obtained by observing a composition according to Comparative Example 2 with a transmission electron microscope (TEM).

[Fig. 3] Fig. 3 is an explanatory view (photograph) obtained by observing a thermoplastic resin composition according to Example 4 of the present invention with a transmission electron microscope (TEM).

[Description of Embodiments]

Hereinafter, the present invention will be described in detail.

The thermoplastic resin composition of the present invention is a resin composition containing a phenoxy resin (A) and a polyamide resin (B).

Since the thermoplastic resin composition of the present invention uses an amorphous phenoxy resin (A), a wide range of molding conditions during injection molding is included. In addition, since the thermoplastic resin composition of the present invention uses a polyamide resin (B) which is an engineering plastic, it has excellent heat resistance.

The phenoxy resin (A) is a thermoplastic resin obtained from a condensation reaction between a divalent phenol compound and an epihalohydrin or a polyaddition reaction between a divalent phenol compound and a bifunctional epoxy resin, and can be obtained through well-known methods in the related art in a solution or in the absence of a solvent. The average molecular weight, as a weight average molecular weight (Mw), is usually 10,000 to 200,000, and is preferably 20,000 to 100,000 and more preferably 30,000 to 80,000. If Mw is too low, the strength of a molded body is inferior, and if Mw is too high, workability or processability is likely to be inferior. Mw is a value which is measured through gel permeation chromatography (GPC) and converted using a standard polystyrene calibration curve.

The hydroxyl equivalent (g/eq) of the phenoxy resin (A) is usually 50 to 1,000, and is preferably 100 to 750 and particularly preferably 200 to 500. If the hydroxyl equivalent is too low, a water absorption rate increases due to an increased number of hydroxyl groups. Therefore, there is a concern that mechanical properties may deteriorate. If the hydroxyl equivalent is too high, wettability with respect to a reinforcing fiber base material, particularly a carbon fiber, deteriorates due to a small number of hydroxyl groups. Therefore, a sufficient reinforcing effect cannot be expected during reinforcing of carbon fibers. Here, the hydroxyl equivalent referred to in the present specification means a secondary hydroxyl equivalent. A polymer chain terminal functional group of a phenoxy resin (A) may have either or both of an epoxy group and a hydroxyl group.

The glass transition temperature (Tg) of a phenoxy resin is suitably 65°C or higher, and is preferably 70°C to 200°C and more preferably 80°C to 200°C. If the glass transition temperature is lower than 65°C, moldability improves. However, in this case there is a concern that a tensile modulus retention rate or a dimensional retention rate may deteriorate. In addition, if the glass transition temperature is higher than 200°C, fluidity of a resin during molding processing decreases and the processing is required to be carried out at a higher temperature, which is not very preferable.

The glass transition temperature of a phenoxy resin is a numerical value which is measured with a differential scanning calorimeter in a range of 20°C to 280°C under a condition of a rate of temperature increase of 10°C/min and obtained from the second scan peak value.

The phenoxy resin (A) is not particularly limited as long as it has the above-described properties. However, examples thereof include a bisphenol A-type phenoxy resin (for example, Phenototo YP-50, YP-50S, and YP-55U manufactured by NIPPON STEEL Chemical & Material Co., Ltd.), a bisphenol F-type phenoxy resin (for example, Phenototo FX-316 manufactured by NIPPON STEEL Chemical & Material Co., Ltd.), a copolymerization type phenoxy resin (for example, YP-70 manufactured by NIPPON STEEL Chemical & Material Co., Ltd.) of bisphenol A and bisphenol F, or a special phenoxy resin (for example, Phenototo YPB-43C and FX293 manufactured by NIPPON STEEL Chemical & Material Co., Ltd.), and these can be used alone or in combination of two or more thereof. In addition, a thermoplastic epoxy resin which is a thermoplastic resin similar to a phenoxy resin can also be used, and in general, a polyhydroxy polyether resin called a phenoxy resin is most preferably used in the present invention.

In addition, it is preferable that the phenoxy resin (A) be solid at normal temperature and exhibit a melt viscosity of 3,000 Pa·s or lower at a temperature of 200°C or higher. The melt viscosity is more preferably at most 2,500 Pa·s and still more preferably at most 1,000 Pa·s.

In addition, in thermogravimetry (TG), the phenoxy resin (A) preferably has a heating weight loss rate of less than 1% when heated to 300°C. Examples of the thermogravimetry (TG) include a method of raising the temperature at 10°C/min in an air atmosphere. If this heating weight loss rate is 1% or more, a phenoxy resin thermally deteriorates during molding processing, which may cause discoloration of a molded body or deterioration in mechanical strength.

A polyamide resin (B) is blended with the thermoplastic resin composition of the present invention together with the phenoxy resin (A). Blending of the polyamide resin (B) therewith can improve heat resistance of a molded body through optimization of morphology of a matrix resin and improve impregnation properties with respect to a reinforcing fiber base material due to reduction in melt viscosity of a resin composition. Since both of the phenoxy resin (A) and the polyamide resin (B) are resins having a polar group, it is assumed that these have good compatibility and effects of blending therewith are thus exhibited. In particular, regarding the improvement in heat resistance, the Tg of the blended resins can greatly exceed that of the phenoxy resin, and resins can be developed for applications of materials for, for example, automobiles, railway vehicles, and aircraft in which higher heat resistance is required.

The polyamide resin (B) is a thermoplastic resin in which a main chain is formed through repetition of amide bonds, and is obtained through ring-opening polymerization of a lactam, co-condensation polymerization of lactams, dehydration condensation of diamines with dicarboxylic acids, and the like. Examples of lactams include ε-caprolactam, undecane lactam, and lauryl lactam. In addition, examples of the diamines include aliphatic diamines such as hexamethylenediamine, nonanediamine, and methylpentadiamine, alicyclic diamines such as cyclohexanediamine, methylcyclohexanediamine, isophorodiamine, norbornane dimethylamine, and tricyclodecane dimethylamine, and aromatic diamines such as p-phenylenediamine, m-phenylenediamine, p-xylylenediamine, m-xylylenediamine, 4,4'-diaminodiphenylmethane, 4,4'-diaminodiphenylsulfone, and 4,4'-diaminodiphenyl ether. In addition, examples of the dicarboxylic acids include aliphatic dicarboxylic acids such as malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid, suberic acid, alicyclic dicarboxylic acids such as 1,3-cyclopentanedicarboxylic acid, and 1,4-cyclohexanedicarboxylic acid, and aromatic dicarboxylic acids such as terephthalic acid, isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, diphenic acid, 4,4'-oxydibenzoic acid, diphenylmethane-4,4'-dicarboxylic acid, diphenylsulfone-4,4'-dicarboxylic acid, and 4,4'-biphenyldicarboxylic acid.

The polyamide resin (B) is a fully-aliphatic polyamide resin (for example, nylon 6, nylon 11, nylon 12, nylon 66, and nylon 610) which is also called nylon whose main chain is composed of an aliphatic skeleton, a semi-aliphatic polyamide resin or semi-aromatic polyamide resin (for example, nylon 6I, nylon 6T, nylon 9T, nylon M5T, and nylon MXD6) which contains aromatic skeleton in a main chain, and a fully-aromatic polyamide resin [Kevlar and Nomex (manufactured by DU PONT-TORAY CO., LTD.) and Twaron and Conex (manufactured by TEIJIN LIMITED)] of which a main chain is composed of only an aromatic skeleton and which is also called an aramid.

In the present invention, among these various kinds of polyamide resins, a fully-aliphatic polyamide resin and/or a semi-aliphatic (semi-aromatic) polyamide resin are preferably used. The polyamide resin may be appropriately selected depending on applications of the resin composition, but a fully-aliphatic polyamide resin is more preferable from the viewpoint of a balance between performance of an obtained resin composition, processability, cost, and the like, and the fully-aliphatic polyamide resins termed nylon 6 (polyamide 6) and nylon 66 (polyamide 66) are most preferable.

The polyamide resin (B) may have a melting point of 180°C or higher and a melt viscosity at a temperature of 200°C or higher of 4,000 Pa·s or lower. It is preferable to use a polyamide resin (B) having a melting point of 200°C or higher and a melt viscosity at a temperature of 200°C to 350°C of 4,000 Pa·s or lower. Fully-aliphatic and semi-aromatic polyamide resins are preferable because these have a relatively low melt viscosity, and in this case the melt viscosity of a matrix resin can be reduced to a low level. Nylon 6, nylon 66, and nylon MXD6 are most preferably used because these have a melt viscosity at 250°C to 350°C of 1,000 Pa·s or lower.

A weight average molecular weight (Mw) of the polyamide resin (B) is desirably 10,000 or more and more desirably 25,000 or more. By using a polyamide resin having an Mw of 10,000 or more, favorable mechanical strength in a molded body is secured.

In the thermoplastic resin composition of the present invention, the proportion of the phenoxy resin (A) is 50 to 90 mass% and the proportion of the polyamide resin (B) is 10 to 50 mass% in a case where the total amount of the above-described phenoxy resin (A) and the polyamide resin (B) is 100 mass%. That is, these are incorporated at a ratio of 90/10 to 50/50 which is a formulation ratio (mass ratio) represented by (A)/(B). This formulation ratio (A)/(B) is preferably 80/20 to 50/50 and more preferably 80/20 to 60/40. If the formulation ratio (A)/(B) exceeds 90/10 and the proportion of the phenoxy resin (A) further increases, the effect of improving heat resistance which is an effect obtained through formulation with a polyamide resin cannot be obtained. In addition, if the formulation ratio (A)/(B) is less than 50/50 and the proportion of the polyamide resin (B) further increases, improvement in rigidity due to blending with a phenoxy resin is not obtained so that the rigidity in a high temperature environment decreases.

Here, in the present invention, with the provision of a thermoplastic resin composition particularly having excellent heat resistance, a dumbbell test piece (JIS K 7139, Type A1) produced by subjecting this resin composition to injection molding exhibits a retention rate (tensile modulus retention rate) in which a tensile modulus measured under a temperature condition of 80°C is 50% or more relative to a tensile modulus measured under a temperature condition of 23°C. Regarding the injection molding conditions, the dumbbell test piece may be, for example, produced under the molding conditions in Examples to be described below, and the tensile modulus may be according to JIS K 7161. In addition, it is preferable that the thermoplastic resin composition of the present invention exhibit a retention rate (dimensional retention rate) in which a total length of the dumbbell test piece after imparting heating history to the test piece is 98% or more relative to a total length of the test piece before imparting heating history thereto at 120°C for 2 hours under static conditions. Favorable heat resistance is exhibited if either of the criteria of such a tensile modulus retention rate or a dimensional retention rate is satisfied. However, in the present invention, it is necessary for the tensile modulus retention rate to be 50% or more and it is most preferable that both retention rates be satisfied. If the tensile modulus retention rate is less than 50%, a molded article of the resin composition is likely to be deformed by an external force applied in a high temperature environment and the mechanical strength of the molded article greatly deteriorates, which is not suitable. On the other hand, if the dimensional retention rate is less than 98%, there is a concern that defects of a product or decrease in accuracy may be caused by self-shrinkage of a molded article in a high temperature environment.

The tensile modulus retention rate and the dimensional retention rate are respectively numerical values calculated by the following Equations (i) and (ii) from results of dimensional measurement and a tensile test of the dumbbell test piece.

[Equation (i)]:

Tensile modulus retention rate (%) = M [tensile modulus (MPa) at 80°C]/Mo [tensile modulus (MPa) at 23°C] × 100

[Equation (ii)]:

Dimensional retention rate (%) = L [total length (mm) after heating history]/Lo [total length (mm) before heating history] × 100

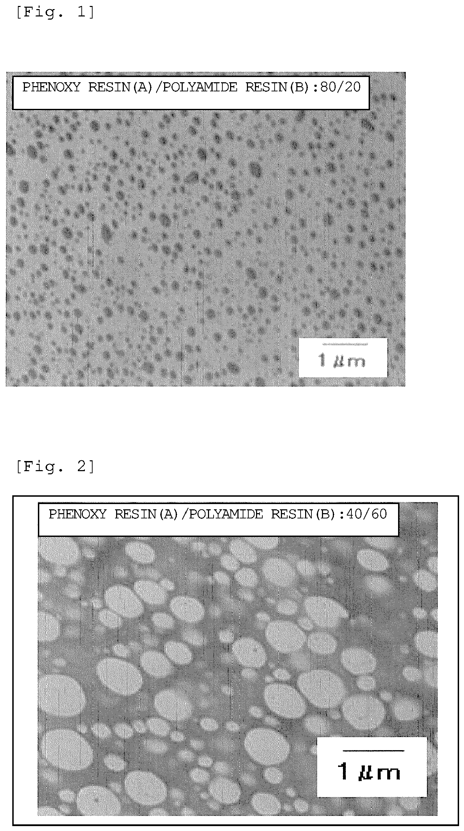

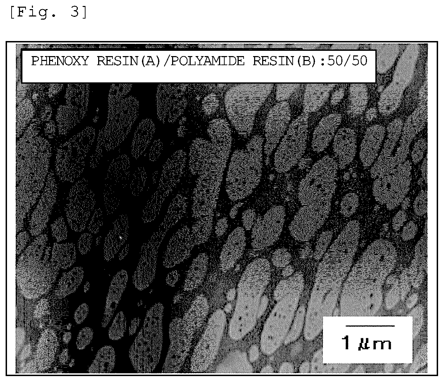

Regarding the thermoplastic resin composition of the present invention, it has been confirmed that the phenoxy resin (A) and the polyamide resin (B) form a so-called sea-island structure. This sea-island structure can be observed through transmission electron microscope observation, and a continuous phase corresponding to a sea part and a dispersion phase corresponding to an island part change depending on the formulation ratio between the phenoxy resin (A) and the polyamide resin (B). However, it is preferable that the polyamide resin (B) have an island shape and be dispersed in the phenoxy resin (A) (for example, refer to Fig. 1 to be described below). The dispersion of a polyamide resin (B) may be in a form in which a polyamide resin (B) is dispersed in a continuous phase of a phenoxy resin (A) as described above, or may be conversely a state in which, in a case where a phenoxy resin (A) is dispersed in an island shape in a continuous phase of a polyamide resin (B), the dispersed phenoxy resin (A) has a phase (which is called a lake phase, and refer to Fig. 3 to be described below) in which a polyamide resin (B) is further dispersed in an island shape in the dispersed phenoxy resin (A).

The thermoplastic resin composition of the present invention exhibits a superior impact resistance compared with that of a polyamide resin-rich composition, and it is assumed that the cause of this is due to the manifestation of the morphology of the resin composition. In addition, although a phenoxy resin and a polyamide resin are immiscible with each other, the compatibility therebetween is good, so that a polyamide having a high melting point fixes a phenoxy resin which has a low Tg and is easily deformed. It is thought that the dimensional retention rate, the tensile modulus retention rate, and the mechanical properties such as load deflection temperature relating to heat resistance of the resin composition are improved compared with those of a single phenoxy resin in order to reduce deformation thereof.

It is preferable that the thermoplastic resin composition of the present invention have, as melting characteristics thereof, a melt flow rate (MFR) at a temperature of 250°C to 310°C and a load of 2.16 kg of 1.0 g/10 minutes or more, and a melt tension of 5 mN or more. If the MFR and the melt tension of the resin composition are within the ranges, not only can a molded body be obtained through injection molding, but also blow molding of the resin composition, film formation through an inflation method, and melt spinning become possible, whereby the thermoplastic resin composition of the present invention can be developed for various applications.

The MFR which is preferably 1.0 to 40 g/10 minutes and the melt tension which is more preferably at least 5 to 50 mN are melting characteristics of a resin composition.

In addition, the thermoplastic resin composition of the present invention desirably has favorable adhesiveness with respect to a reinforcing fiber base material in a case where the thermoplastic resin composition is used as a matrix resin of a fiber-reinforced plastic (FRP) material. Regarding a method for evaluating such adhesiveness, it is possible to evaluate the adhesiveness by measuring the interfacial shear strength between a monofilament and the thermoplastic resin composition through a microdroplet method (MD method) (NPL 1). If the interfacial shear strength at 23°C which has been measured through this method is 35 MPa or more, fiber-reinforced plastic having excellent strength and favorable adhesiveness between a monofilament and a matrix resin composition is obtained. On the other hand, if the interfacial shear strength is less than 35 MPa, in a case where a load is applied to fiber-reinforced plastic, the reinforcing fibers cannot be made to bear a load due to peeling-off occurring from an interface between the reinforcing fibers and the matrix resin composition and compatibility between the matrix resin and the filament itself is poor. Therefore, poor impregnation between the reinforcing fibers during molding occurs. If the interfacial shear strength between the reinforcing fibers and the thermoplastic resin composition which is a matrix resin is insufficient in this manner, sufficient mechanical properties for an FRP material cannot be obtained. Such an interfacial shear strength with the reinforcing fibers is preferably 50 MPa or more.

Furthermore, powder of a thermoplastic resin or a thermosetting resin, for example, powder of a polyvinylidene chloride resin, natural rubber, synthetic rubber, an epoxy compound, and the like other than the phenoxy resin (A) or the polyamide resin (B) can be blended with the thermoplastic resin composition of the present invention within a range in which the mechanical characteristics or the heat resistance is not impaired.

In particular, an epoxy compound is preferably used as it can be used in combination with the phenoxy resin (A), the melt viscosity of the thermoplastic resin composition of the present invention can be adjusted, the affinity between the phenoxy resin (A) and the polyamide resin (B) can be improved, and the adhesiveness in a case of being used with a reinforcing fiber material can be improved. Here, the epoxy compound is a compound having at least one epoxy group in one molecule, and it is desirable that the epoxy compound be solid at normal temperature, the number average molecular weight thereof be at most 10,000, preferably 1,000 to 10,000, and more preferably 5,000 to 10,000, and the epoxy compound be incorporated at a proportion of 0.1 to 100 parts by mass with respect to 100 parts by mass of the phenoxy resin (A). Examples of such epoxy compounds include a bisphenol-type epoxy resin, a phenol novolac-type epoxy resin, and a triphenylglycidyl ether-type epoxy resin. Among these, a solid epoxy resin having a bisphenol A-type or bisphenol F-type skeleton and a softening point of 50°C or more is preferably used.

If the melt viscosity of the thermoplastic resin composition of the present invention at 200°C to 350°C is within a range not exceeding 3,000 Pa·s, various inorganic fillers, carbon fillers such as carbon black or a carbon nanotube, pigments, colorants, antioxidants, ultraviolet inhibitors, or the like can be blended therewith.

The above-described resin composition is a mixture containing the phenoxy resin (A) and the polyamide resin (B), but can contain other resins as described above or additives as necessary. In the case where the thermoplastic resin composition of the present invention contains components other than the phenoxy resin (A) and the polyamide resin (B), the proportion thereof may be at most 50 mass% and preferably at most 20 mass%. The resin composition in this case may have the above-described melt viscosity as a whole.

The thermoplastic resin composition of the present invention can be blended with an inorganic filler or a reinforcing fiber as a reinforcing filler. Examples of inorganic fillers include non-spherical or spherical fillers such as calcium carbonate, talc, clay, silica, alumina, and boron nitride. A reinforcing fiber may be a chopped fiber or a milled fiber. One kind or two or more kinds of fibers selected from the group consisting of organic fibers including ceramic fibers such as boron fibers or silicon carbide fibers, and aramid fibers in addition to glass fibers or carbon fibers can be used, but carbon fibers having high strength and favorable thermal conductivity are preferably used. There are two types of carbon fibers, a PAN type and a pitch type, and both of these can be suitably used. Therefore, both of these appropriately selected depending on applications of FRP molded bodies may be used.

In a case where a reinforcing fiber is used as a reinforcing filler, if a sizing material (sizing agent), a coupling agent, or the like is attached to the surface thereof, the handleability or the wettability with respect to the reinforcing fiber of the phenoxy resin (A) and the polyamide resin (B) can be improved, which is preferable. Examples of sizing agents include maleic anhydride compounds, urethane compounds, acrylic compound, epoxy compounds, phenolic compounds, or derivatives of these compounds, and a sizing agent containing an epoxy compound can be suitably used. Examples of coupling agents include amino-based, epoxy-based, chloro-based, mercapto-based, and cation-based silane coupling agents.

By impregnating the thermoplastic resin composition of the present invention into a reinforcing fiber base material consisting of a continuous fiber through a well-known method such as a film stacking method, a powder coating method, a commingled yarn method, or the like, a fiber-reinforced plastic molding material can be obtained using the composition as a matrix resin.

At this time, one kind or two or more kinds of fibers selected from the group consisting of carbon fibers or glass fibers and organic fibers including ceramic fibers such as boron fibers or silicon carbide fibers, and aramid fibers can be used as continuous fibers, but carbon fibers having high strength and favorable thermal conductivity are preferably used. There are two types of carbon fibers, a PAN type and a pitch type, and both of these can be suitably used. Therefore, both of these appropriately selected depending on applications of FRP molded bodies may be used. In addition, an arbitrary substrate such as a uni-directional substrate (UD material) or a cloth material such as a plain weave or a twill weave can be used as a reinforcing fiber base material.

Polymers other than thermoplastic resins and usual additives such as ultraviolet absorbers (for example, resorcinol and salicylate), anti-colorants such as phosphite and hypophosphite, lubricants, releasing agents (such as stearic acid, montanic acid, metal salts thereof, esters thereof, half esters thereof, stearyl alcohol, stearamide, and polyethylene wax), colorants including dyes and pigments, carbon black as a conductive agent or a colorant, crystal nucleating agents, plasticizers, flame retardants (such as bromine flame retardants, phosphorus flame retardants, red phosphorus, and silicone retardants), auxiliary flame retardants, and antistatic agents can be further blended with the thermoplastic resin composition of the present invention to further impart predetermined characteristics to the thermoplastic resin composition.

Melt-kneading is preferably used as a method for producing the thermoplastic resin composition of the present invention, and well-known methods can be used for melt-kneading. For example, melt-kneading can be performed using a Banbury mixer, a rubber roll machine, a kneader, or a single- or twin-screw extruder at a melting temperature of the thermoplastic resin or higher to produce a resin composition. Among these, a twin-screw extruder is preferable. Examples of kneading methods include a method 1) for collectively kneading the phenoxy resin (A) and the polyamide resin (B), a method 2) for first supplying the phenoxy resin (A) from a main hopper and subsequently supplying the polyamide resin (B) from a downstream side hopper and kneading the mixture, and a method 3) for supplying the polyamide resin (B) from a main hopper and subsequently supplying the phenoxy resin (A) from a downstream side hopper to knead the mixture, and any kneading method may be used.

The thermoplastic resin composition of the present invention can be pelletized through well-known methods, can be usually molded through well-known arbitrary methods such as injection molding, injection compression molding, compression molding, extrusion molding, blow molding, press molding, and spinning, and can be processed and used in various molded articles. The thermoplastic resin composition can be used in molded products such as injection molded articles, extrusion molded articles, blow molded articles, films, sheets, and fibers, and can be used in various films such as unstretched films, uniaxially stretched films, and biaxially stretched films, and moreover can be used in various fibers such as undrawn yarn, drawn yarn, and ultra-drawn yarn. In particular, in the case of injection molded articles, it is preferable to have the above-described tensile modulus retention rate and dimensional retention rate.

The thermoplastic resin composition of the present invention and molded articles made of the same can be recycled. For example, a resin composition obtained by pulverizing a resin composition and a molded article made of the same, preferably into the form of powder, and subsequently blending an additive therewith can be used in the same manner as the resin composition of the present invention and can be made into a molded article again.

Since the thermoplastic resin composition of the present invention has such a composition, characteristics, and the like, it has a significantly improved rigidity at a high temperature. Therefore, it can be used not only as a material of a usual resin part but also in molded parts for automobiles or industrial equipment for applications requiring heat resistance, for example, engine covers, parts, or cases for electrical and electronic devices generating a large amount of heat, and matrix resins of fiber-reinforced plastic (FRP) materials. In particular, it can be suitably used for applications such as automobiles, railway vehicles, and aircraft.

Examples

Hereinafter, the present invention will be described more specifically with reference to examples, but the present invention is not limited to the description of these examples. Methods for measuring and testing various physical properties in the examples and comparative examples are as follows.

- Melt viscosity: A rheometer (manufactured by Anton Paar) was used to measure the melt viscosity of a 4.3 cm$^3$ sample sandwiched between parallel plates at 250°C under the conditions of a frequency of 1 Hz and a load strain of 5% while raising the temperature at 20°C/min.

(1) Melt flow rate (MFR): Measured according to JIS K 7210 (measurement under the conditions of a temperature of 250°C to 310°C and a load of 2.16 kg).

(2) Dimensional retention rate in high temperature environment: The total length of a dumbbell test piece having dimensions of a total length of 215 mm, a width of 10 mm, and a thickness of 4 mm including a grip portion was measured with calipers at 23°C and 120°C, and the dimensional retention rates in a high temperature environment were calculated from the total length of the test piece measured at each temperature according to the Equation (ii).

(3) Tensile modulus: A universal material tester (manufactured by Instron, type 5582) was used. A dumbbell test piece having dimensions of a total length of 215 mm, a width of 10 mm, and a thickness of 4 mm including a grip portion was subjected to a tensile test with a distance between chucks of 114 mm at a speed of 50 mm/min at 23°C and 80°C, and the tensile modulus was obtained from an obtained stress-strain diagram. The tensile modulus retention rate (%) was calculated from the results of the tensile modulus at each of these temperatures according to the Equation (i).

(4) Vicat softening temperature: An HDT tester (manufactured by Toyo Seiki Seisaku-sho, Ltd., 6M-2) was used. The Vicat softening temperature was measured through a B50 method according to JIS K 7206.

(5) Load deflection temperature: A load deflection temperature tester (manufactured by Yasuda Seiki Seisakusho, Ltd., No. 148-HDPC-3) was used. The temperature of an oil tank was raised at 120°C/min in a state where a bending stress of 0.45 MPa with a span of 64 mm was applied to a multipurpose test piece having a length of 80 mm, a width of 10 mm, and a thickness of 4 mm, and a temperature at which a specified deflection amount (0.34 mm) was reached was regarded as a load deflection temperature.

(6) Charpy impact strength: A Charpy impact tester (manufactured by Yasuda Seiki Seisakusho, Ltd., No. 258PC-S) was used. A Charpy impact test was performed on a multipurpose test piece which has a length of 80 mm, a width of 10 mm, a thickness of 4 mm, and a V notch with a depth of 2 mm penetrating the plate thickness at room temperature while setting the test piece longitudinal direction as an MD direction. The absorption energy was obtained from the difference between hammer potential energies before and after the test piece was destroyed and regarded as Charpy impact strength.

(7) Saturated water absorption rate: A dumbbell test piece was immersed in water at 23°C, and the saturated water absorption rate was measured.

(8) Interfacial shear strength: A composite material interfacial property evaluation device (manufactured by Tohei Sangyo Corporation, HM410) was used to evaluate the interface adhesion between a carbon fiber and a resin through a microdroplet method. Specifically, a carbon fiber filament was taken out of a carbon fiber strand and set in a sample holder. Drops of a heat-melted resin composition were formed on the carbon fiber filament to obtain a sample for measurement. The obtained sample was set in the device, the drops were sandwiched between device blades, and the carbon fiber filament was run on the device at a speed of 2 μm/s to measure a maximum pull-out load F when the drops were pulled out from the carbon fiber filament. The measurement was performed at 23°C. An interfacial shear strength $\tau$ was calculated by the following equation. The interfacial shear strengths $\tau$ of about 10 to 20 drops per sample were measured, and an average value thereof was obtained.

Interfacial shear strength $\tau$ (unit: MPa) = $F/\pi dl$
(F: maximum pull-out load, d: carbon fiber filament diameter, 1: diameter of drop in pull-out direction)

[Phenoxy Resin (A)]

A-1: Phenototo YP-50S (bisphenol A-type manufactured by NIPPON STEEL Chemical & Material Co., Ltd., Mw = 40,000, hydroxyl equivalent = 284 g/eq, melt viscosity at 250°C = 90 Pa·s, and 1% heating weight loss rate = 315°C)

[Polyamide Resin (B)]

B-1: CM1017 (nylon 6 (polyamide 6) manufactured by TORAY INDUSTRIES INC., melting point = 225°C, and melt viscosity at 250°C = 125 Pa·s)
B-2: 1300S (nylon 66 (polyamide 66) manufactured by Asahi Kasei Corporation, melting point = 268°C, and melt viscosity at 280°C = 550 Pa·s)
B-3: 6002 (nylon MXD6 (polyamide MDX6) manufactured by Mitsubishi Engineering-Plastics Corporation, melting point = 243°C, and melt viscosity at 250°C = 300 Pa·s)
B-4: N1000A (nylon 9T (polyamide 9T) manufactured by Kuraray Co., Ltd., melting point = 300°C, and melt viscosity at 320°C = 3,500 Pa·s)

Hereinafter, the examples and comparative examples will be described.
The phenoxy resin (A) and the polyamide resin (B-1) were blended with each other at ratios shown in Table 1 and then melt-kneaded with a twin-screw extruder (set temperature: 230°C) having a screw diameter of 26 mm and rotating in the same direction to obtain pellets. A dumbbell test piece and a multipurpose test piece having a length of 80 mm, a width of 10 mm, and a thickness of 4 mm were produced using the obtained pellets with a molding machine (molding temperature setting range: 210°C to 260°C, mold temperature setting range: 40°C to 85°C) so as to be suitable for each physical property evaluation. The former was used to evaluate (2), (3), and (7) and the latter was used to evaluate (4) to (6). Regarding the evaluation of (1) and (8), the phenoxy resin (A) and the polyamide resin (B-1) were blended with each other at the ratios shown in Table 1. Thereafter, regarding (1), measurement was performed using pellets produced by melt-kneading the mixture, and regarding (8), the pellets were heated to a melting temperature and resin drops were attached to carbon fiber filaments to perform evaluation. The results are shown in Table 1.

[Table 1]

| | | | Example 1 | Example 2 | Example 3 | Example 4 | Example 5 | Comparative Exam. 1 | Comparative Exam. 2 | Comparative Exam. 3 |
|---|---|---|---|---|---|---|---|---|---|---|
| Phenoxy resin (A) | A-1 | Mass% | 80 | 70 | 60 | 50 | 90 | 100 | 40 | 0 |
| Polyamide resin (B) | B-1 | Mass% | 20 | 30 | 40 | 50 | 10 | 0 | 60 | 100 |
| Melt-kneading | Cylinder set temperature | °C | 230 | 230 | 230 | 230 | 230 | - | 230 | - |
| Injection molding | Cylinder set temperature | °C | 235 | 235 | 235 | 235 | 235 | 210 | 260 | 260 |
| | Mold set temperature | °C | 60 | 60 | 60 | 60 | 60 | 40 | 75 | 85 |
| Continuous phase (sea) | | - | A-1 | A-1 | B-1 | B-1 | A-1 | - | B-1 | - |
| Dispersion phase (island) | | - | B-1 | B-1 | A-1 | A-1 | B-1 | - | A-1 | - |
| Dispersion phase (lake) | | - | - | - | B-1 | B-1 | - | - | - | - |
| (1) Melt flow rate (250°C, 2.16 kg) | | g/10 min | 12 | 13 | 14 | 17 | 13 | 19 | 22 | 45 |
| (2) Dimensional retention rate in high temperature environment | | % | 98.4 | 99.5 | 99.3 | 99.5 | 92.1 | 74.8 | 99.5 | 99.8 |
| (3) Tensile modulus retention rate | | % | 57 | 53 | 53 | 51 | 59 | 54 | 38 | 23 |
| Tensile modulus (23°C) | | MPa | 2390 | 2540 | 2460 | 2530 | 2360 | 2520 | 2660 | 2840 |
| Tensile modulus (80°C) | | MPa | 1370 | 1340 | 1300 | 1290 | 1400 | 1370 | 1010 | 660 |
| (4) Vicat softening temperature | | °C | 96 | 98 | 102 | 110 | 95 | 90 | 133 | 198 |
| (5) Load deflection temperature | | °C | 89 | 90 | 90 | 90 | 89 | 80 | 96 | 166 |
| (6) Charpy impact strength | | kJ/m$^2$ | 6.3 | 5.7 | 6.6 | 5.7 | 8.1 | 5.4 | 4.9 | 5.2 |
| (7) Saturated water absorption rate | | % | 2.1 | 3.2 | 4.3 | 5.1 | 1.2 | 0.5 | 5.7 | 8.9 |
| (8) Interfacial shear strength | | MPa | 56 | 55 | 54 | 53 | 57 | 58 | 50 | 37 |

The phenoxy resin (A) and the polyamide resins (B-2), (B-3), and (B-4) were blended with each other at ratios shown in Table 2 and then melt-kneaded with a twin-screw extruder (set temperature: 250°C to 320°C) having a screw diameter of 26 mm and rotating in the same direction to obtain pellets. A dumbbell test piece and a multipurpose test piece having a length of 80 mm, a width of 10 mm, and a thickness of 4 mm were produced using the obtained pellets with a molding machine (molding temperature setting range: 260°C to 320°C, mold temperature setting range: 50°C to 95°C) so as to be suitable for each physical property evaluation. The former was used to evaluate (2), (3), and (7) and the latter was used to evaluate (4) to (6). Regarding the evaluation of (1) and (8), the phenoxy resin (A) and the polyamide resins (B) were blended with each other at the ratios shown in Table 2. Thereafter, regarding (1), measurement was performed under the conditions shown in (1-2), (1-3), and (1-4) of Table 2 using pellets produced by melt-kneading the mixture, and regarding (8), the pellets were heated to a melting temperature and resin drops were attached to carbon fiber filaments to perform evaluation.

[Table 2]

| | | Unit | Exam. 6 | Exam. 7 | Exam. 8 | Exam. 9 | Exam. 10 | Exam. 11 | Compar a Exam 4 | Compar a Exam 5 | Compar a Exam 6 | Compar a Exam 7 | Compar a Exam 8 | Compar a Exam 9 |
|---|---|---|---|---|---|---|---|---|---|---|---|---|---|---|
| Phenoxy resin (A) | A-1 | Mass% | 80 | 50 | 80 | 50 | 80 | 50 | 20 | 20 | 20 | - | - | - |
| Polyamide resin (B) | B-2 | Mass% | 20 | 50 | - | - | - | | 80 | - | - | 100 | - | - |
| | B-3 | Mass% | - | - | 20 | 50 | - | - | - | 80 | - | - | 100 | - |
| | B-4 | Mass% | - | - | - | - | 20 | 50 | - | - | 80 | - | - | 100 |
| Melt-kneading | Cylinder set temperature | °C | 285 | 285 | 250 | 260 | 320 | 320 | 285 | 260 | 320 | - | - | - |
| Injection molding | Cylinder set temperature | °C | 270 | 280 | 260 | 265 | 305 | 320 | 280 | 265 | 320 | 280 | 270 | 320 |
| | Mold set temperature | °C | 80 | 85 | 85 | 75 | 50 | 95 | 85 | 70 | 95 | 85 | 80 | 95 |
| (1-2) Melt flow rate (250°C, 2.16 kg) | | g/10 min | - | - | 4.5 | 1.9 | - | - | - | 1.5 | | | 6.0 | |
| (1-3) Melt flow rate (270°C, 2.16 kg) | | g/10 min | 17.4 | 20.3 | - | - | - | - | 38.5 | - | | 32.9 | | |
| (1-4) Melt flow rate (310°C, 2.16 kg) | | g/10 min | - | - | - | - | 32.6 | 10.8 | - | - | 17.2 | | | 11.9 |
| (2) Dimensional retention rate in high temperature environment | | % | 99.2 | 99.0 | 98.8 | 99.4 | 99.0 | 99.2 | 99.3 | 99.4 | 99.3 | 99.4 | 99.4 | 99.4 |
| (3) Tensile modulus retention rate | | % | 83 | 59 | 62 | 51 | 97 | 95 | 43 | 37 | 48 | 36 | 41 | 44 |
| Tensile modulus (23°C) | | MPa | 2100 | 2210 | 2590 | 2600 | 2030 | 2120 | 2340 | 2890 | 2080 | 2320 | 3150 | 2060 |
| Tensile modulus (80°C) | | MPa | 1740 | 1300 | 1600 | 1320 | 1970 | 2000 | 1010 | 1060 | 1000 | 830 | 1290 | 900 |
| (4) Vicat softening temperature | | °C | 96 | 122 | 96 | 105 | 205< | 205< | 203 | 205< | 205< | 205< | 202 | 205< |
| (5) Load deflection temperature | | °C | 88 | 89 | 88 | 86 | 89 | 117 | 145 | 86 | 200< | 159 | 115 | 200< |
| (6) Charpy impact strength | | kJ/m² | 2.6 | 6.1 | 7.1 | 1.5 | 2.9 | 3.5 | 5.5 | 1.5 | 1.8 | 5.2 | 2.0 | 8.0 |

(continued)

| | | Exam . 6 | Exam . 7 | Exam . 8 | Exam . 9 | Exam . 10 | Exam . 11 | Compar a Exam 4 | Compar a Exam 5 | Compar a Exam 6 | Compar a Exam 7 | Compar a Exam 8 | Compar a Exam 9 |
|---|---|---|---|---|---|---|---|---|---|---|---|---|---|
| (7) Saturated water absorption rate | % | 2.9 | 5.8 | 2.0 | 3.5 | 0.4 | 0.4 | 7.8 | 4.9 | 0.4 | 9.0 | 5.7 | 0.3 |
| (8) Interfacial shear strength | MPa | 56 | 53 | 55 | 50 | 56 | 51 | 45 | 41 | 43 | 38 | 30 | 35 |

As can be confirmed in the examples of Tables 1 and 2, a molded body having a superior impact resistance and adhesion properties with respect to a reinforcing fiber compared to the comparative examples can be obtained using the thermoplastic resin composition of the present invention. In particular, Examples 1 to 4 and 6 to 11 exhibit excellent heat resistance characteristics achieving both high tensile modulus retention rate and high dimensional retention rate in a high temperature environment, and can be widely used from electronic and electrical devices to automobiles, industrial apparatuses, or the like which are in a thermally harsh environment.

[Transmission Electron Microscope Observation]

The compositions according to Example 1, Comparative Example 2, and Example 4 were observed with a transmission electron microscope (TEM). The observation method is as follows. First, a sample having a thickness of 100 nm was prepared using each composition through an ultrathin sectioning method and stained with phosphotungstic acid. The stained sample was observed with a transmission electron microscope (H-8100 manufactured by Hitachi High-Tech Corporation.) The results are shown in Figs. 1 to 3.

In Figs. 1 to 3, the portion appearing white is a phase of the phenoxy resin (A), and the portion appearing black is a phase of the polyamide resin (B). In the composition according to Example 1, it can be seen that the blending proportion of the phenoxy resin (A) is high and the phase of the polyamide resin (B) is dispersed in an island shape in the sea part of the phenoxy resin (A) phase. On the other hand, in the composition according to Comparative Example 2, it can be seen that the blending proportion of the polyamide resin (B) is contrarily high and the phase of the phenoxy resin (A) is dispersed in an island shape in the sea part of the polyamide resin (B) phase. Furthermore, in the composition of Example 4, it can be seen that although the blending proportions of the phenoxy resin (A) and the polyamide resin (B) are the same as each other, the phase of the phenoxy resin (A) is dispersed in an island shape in the sea part of the polyamide resin (B), and it can be seen that the phase of the polyamide resin (B) is further dispersed in an island shape inside the dispersed phase of the phenoxy resin (A) to form a lake phase.

**Claims**

1. A thermoplastic resin composition comprising:

   a phenoxy resin (A) having a hydroxy group and/or an epoxy group at a polymer chain terminal; and
   a polyamide resin (B),
   wherein a proportion of the phenoxy resin (A) is 50 to 90 mass% and a proportion of the polyamide resin (B) is 10 to 50 mass% relative to a total amount of 100 mass% of the phenoxy resin (A) and the polyamide resin (B), and
   wherein a tensile modulus retention rate [Equation (i) below] of a dumbbell test piece (JIS K 7139, Type A1) which is calculated from a tensile modulus (M) at 80°C relative to a tensile modulus (Mo) at 23°C is 50% or more, with the dumbbell test piece being obtained by subjecting the thermoplastic resin composition to injection molding:

   Equation (i): Tensile modulus retention rate (%) = M [tensile modulus (MPa) at 80°C]/Mo [tensile modulus (MPa) at 23°C] × 100.

2. The thermoplastic resin composition according to claim 1, wherein a dimensional retention rate [Equation (ii) below] calculated from a total length of the dumbbell test piece (JIS K 7139, Type A1) before and after imparting heating history to the dumbbell test piece at 120°C for 2 hours under static conditions is 98% is more:

   Equation (ii): Dimensional retention rate (%) = L [total length (mm) after heating history]/Lo [total length (mm) before heating history] × 100.

3. The thermoplastic resin composition according to claim 1 or 2,

wherein the polyamide resin (B) is a fully-aliphatic polyamide and/or a semi-aliphatic polyamide.

4. The thermoplastic resin composition according to claim 3, wherein the polyamide resin (B) is polyamide 6.

5. The thermoplastic resin composition according to any one of claims 1 to 4,
   wherein a glass transition temperature of the phenoxy resin (A) is 65°C to 200°C.

6. The thermoplastic resin composition according to any one of claims 1 to 5, further comprising a reinforcing filler.

7. A pellet of the thermoplastic resin composition according to any one of claims 1 to 6.

8. A molded article manufactured from the thermoplastic resin composition according to any one of claims 1 to 6.

9. Fiber-reinforced plastic comprising:

   a reinforcing fiber base material; and
   the thermoplastic resin composition according to any one of claims 1 to 5.

[Fig. 1]

PHENOXY RESIN(A)/POLYAMIDE RESIN(B):80/20

1 μm

[Fig. 2]

PHENOXY RESIN(A)/POLYAMIDE RESIN(B):40/60

1 μm

[Fig. 3]

PHENOXY RESIN(A)/POLYAMIDE RESIN(B):50/50

1 μm

## INTERNATIONAL SEARCH REPORT

| International application No. |
| --- |
| PCT/JP2019/050362 |

**A. CLASSIFICATION OF SUBJECT MATTER**
C08L 71/10(2006.01)i; C08L 77/02(2006.01)i
FI: C08L71/10; C08L77/02

According to International Patent Classification (IPC) or to both national classification and IPC

**B. FIELDS SEARCHED**

Minimum documentation searched (classification system followed by classification symbols)
C08L71/10; C08L77/02

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2017-199566 A (HITACHI METALS, LTD.) 02.11.2017 (2017-11-02) table 1, examples 1-5, 7-8, etc. | 1-8<br>9 |
| X<br>A | JP 63-199260 A (SEKISUI CHEMICAL CO., LTD.) 17.08.1988 (1988-08-17) table 1, examples 1, 3, etc. | 1-2, 5-8<br>3, 9 |
| P, X | WO 2019/189820 A1 (NIPPON STEEL CHEMICAL & MATERIAL CO., LTD.) 03.10.2019 (2019-10-03) tables 1, 3, examples 2-3, 6-7, 9-10, 12-14, 17-18, 20-21, etc. | 1-9 |

☐ Further documents are listed in the continuation of Box C.      ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 06 March 2020 (06.03.2020) | 24 March 2020 (24.03.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

| International application No. |
|---|
| PCT/JP2019/050362 |

| Patent Documents referred in the Report | Publication Date | Patent Family | Publication Date |
|---|---|---|---|
| JP 2017-199566 A | 02 Nov. 2017 | US 2017/0316849 A1 table 1, examples 1-5, 7-8, etc. | |
| JP 63-199260 A | 17 Aug. 1988 | (Family: none) | |
| WO 2019/189820 A1 | 03 Oct. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0411654 B
- JP 4852262 B
- JP H03237160 B
- JP S63202655 A

**Non-patent literature cited in the description**

- *Reinforced Plastics,* 2013, vol. 59, 330